(19) **Europäisches Patentamt European Patent Office Office européen des brevets**

(11) **EP 2 154 192 B1**

(12) **EUROPEAN PATENT SPECIFICATION**

(45) Date of publication and mention of the grant of the patent:
**02.01.2013 Bulletin 2013/01**

(51) Int Cl.:
*C08L 7/00* (2006.01) *B60C 1/00* (2006.01)
*B60C 11/00* (2006.01) *B60C 15/06* (2006.01)
*C08K 3/04* (2006.01) *C08K 3/36* (2006.01)
*C08L 15/00* (2006.01)

(21) Application number: **08720909.4**

(22) Date of filing: **27.02.2008**

(86) International application number:
**PCT/JP2008/053361**

(87) International publication number:
**WO 2008/142890 (27.11.2008 Gazette 2008/48)**

(54) **PLY FORMED USING SPECIFIED RUBBER COMPOSITION, AND PNEUMATIC TIRE UTILIZING THEM**

LAGE AUS SPEZIELLER KAUTSCHUKZUSAMMENSETZUNG UND SELBIGE ENTHALTENDER LUFTREIFEN

PLI FORMÉS EN UTILISANT UNE COMPOSITION DE CAOUTCHOUC SPÉCIFIQUE ET PNEU LES UTILISANT

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **17.05.2007 JP 2007131907**
**14.06.2007 JP 2007157481**
**21.06.2007 JP 2007163633**

(43) Date of publication of application:
**17.02.2010 Bulletin 2010/07**

(73) Proprietor: **Sumitomo Rubber Industries, Ltd.**
**Kobe-shi, Hyogo 651-0072 (JP)**

(72) Inventors:
• **MIKI, Takashi**
**Kobe-shi**
**Hyogo 651-0072 (JP)**
• **IKEDA, Keiji**
**Kobe-shi**
**Hyogo 651-0072 (JP)**

(74) Representative: **Sauer, Philippe et al**
**Manitz, Finsterwald & Partner GbR**
**Martin-Greif-Strasse 1**
**80336 München (DE)**

(56) References cited:
**EP-A1- 1 484 359       EP-A1- 1 659 000**
**JP-A- 08 230 411       JP-A- 2000 007 839**
**JP-A- 2006 199 858     JP-A- 2006 249 147**

**Description**

TECHNICAL FIELD

The present invention relates to materials for parts of a pneumatic tire. More specifically, the present invention relates to a ply formed by a specific rubber composition, as well as a pneumatic tire provided with these.

BACKGROUND ART

In recent years, environmental issues have been regarded as important, and regulations against $CO_2$ emission have been tightened. Moreover, petroleum resources are limited, and there is a possibility that supply of materials derived from petroleum resources, such as carbon black, might become difficult in the future. In addition, since the amount of supply of such materials has been diminishing year by year, soaring of crude oil prices is expected. Therefore, there have been strong demands for replacing the materials derived from petroleum resources with materials derived from resources other than petroleum.

In general, with respect to commercially available tires, more than half of the entire weight thereof is composed of materials derived from petroleum resources. For example, generally-used tires for passenger cars contain about 20% by mass of a synthetic rubber, about 20% by mass of carbon black, a softening agent, synthetic fibers and the like; therefore, not less than about 50% by mass of the entire tire is composed of materials derived from petroleum resources. Consequently, there have been strong demands for development of a rubber for tires that uses materials derived from natural resources, and satisfies required characteristics that are the same as, or more strict than those for the tires using materials derived from petroleum resources.

However, even in the case where a material derived from natural resources is used as a ply for a tire, the rubber composition used for tires needs to satisfy basic performance depending on members to which it is applied, for example, the ply rubber forming the tire needs to reduce a hysteresis loss, and also to have a good adhesive property between a ply cord and the rubber composition.

Instead of using the carbon black as a main reinforcing agent, a composition using silica as the main reinforcing agent has been proposed; however, addition of silica tends to cause degradation in processability due to an increase in Mooney viscosity upon preparation of the rubber composition. A method is also proposed in which a surfactant-based processing aid or the like is used in combination so as to reduce the Mooney viscosity; however, another problem is that such a processing aid is also derived from petroleum resources.

Moreover, a clinch rubber is placed on each of chafing portions to a rim of a pneumatic tire. The clinch rubber has functions for transmitting a driving force from the rim to the tire during travel and for holding a load of the tire. Therefore, the clinch rubber needs to have high hardness and superior resistance to heat aging. Moreover, in order to reduce abrasion that occurs due to frictional contact with the rim caused by repetitive deformation of the tire during travel, the clinch rubber also needs to have a predetermined abrasion resistant property. Furthermore, since physical characteristics, such as rigidity, hardness and mechanical strength, of the clinch rubber give big influences on steering stability during travel, these characteristics should be set within an appropriate range.

Examples of the rubber composition in which the processability of the clinch rubber is improved include: a rubber composition that contains a synthesized polyisoprene rubber having a predetermined content of cis-1,4-bonding component and a Mooney viscosity $ML_{1+4}$ (100°C) and a natural rubber, a natural rubber adjusted so as to have a total nitrogen content of 0.12 to 0.30% by weight, which is obtained by subjecting a natural rubber latex to a deproteinizing process, and a rubber composition using such a natural rubber. However, in the above-mentioned techniques, it is difficult to reduce the amount of use of materials derived from petroleum resources and also to achieve both of the physical characteristics required for the clinch rubber and the processability upon preparation thereof.

Even in the case where a material derived from natural resources is used as a tread rubber, the rubber used for tires needs to satisfy basic performance depending on members to which it is applied, for example, the tread rubber forming the tread portion of a tire needs to maintain good gripping performance, with the tire rolling resistance being reduced.

In an attempt to reduce the amount of use of materials derived from petroleum resources and also to suppress an increase in the tire rolling resistance caused by a hysteresis loss in the rubber due to heat generation during travel, more specifically, an increase in loss tangent (tan $\delta$) so as to achieve a low fuel consumption, it has been proposed to switch the blending of a filler from large amount addition of carbon black to addition of silica. Even by the addition of silica, it is possible to obtain a rubber composition that provides a rubber having comparatively good durability; however, upon blending silica, another problem tends to arise in which the processability is lowered due to an increase in viscosity upon preparation of the rubber composition. A method is also proposed in which a surfactant-based processing aid or the like for silica is used so as to improve the processability; however, another problem is that such a processing aid is also derived from petroleum resources.

As the rubber composition in which silica is blended, Japanese Patent Laying-Open No. 2006-249147 (Patent Document 1) has proposed a rubber composition for use in an inner liner, which contains not less than 30 parts by mass of silica having a BET specific surface area of less than 150 m$^2$/g and not more than 5 parts by mass of carbon black, relative to 100 parts by mass of a rubber component made from a natural rubber. However, an object of this technique is to improve the rolling resistance of the inner liner, and the patent document has described nothing about a ply, a clinch apex and a tread rubber made from the rubber composition, as well as about performance required for these members.

Moreover, Japanese Patent Laying-Open No. 2006-143821 (Patent Document 2) has proposed a pneumatic tire in which at least in any one of a carcass, a bead portion reinforcing layer, a side portion reinforcing layer and a belt, a coating rubber with which a steel cord is coated is made from a coating rubber composition that contains 100 parts by mass of a diene-based rubber, 30 to 80 parts by mass of silica having a nitrogen adsorption specific surface area of not less than 70 m$^2$/g to not more than 150 m$^2$/g, 1 to 15 parts by mass of a silane coupling agent and an organic acid of cobalt. However, this technique relates to a technique used for coating a steel cord, and the patent document has described nothing about a rubber composition suitable for coating a cord, made from a material other than steel, as well as about performance required for the rubber composition.

EP 1 659 000 A1 discloses a pneumatic tire having a reinforcement layer formed of a steel cord coated with a coating rubber, wherein the reinforcement layer is at least one of a carcass, a bead reinforcing layer, a side reinforcing layer and a belt, wherein the coating rubber contains 100 parts by mass of a diene rubber, 30 to 80 parts by mass of silica, 1 to 15 parts by mass of a silane coupling agent and an organic acid cobalt salt.

EP 1 484 359 A1 relates to a rubber composition for a tire tread comprising 5 to 150 parts by weight of silica or carbon black, respectively, based on 100 parts by weight of a rubber component containing e.g. 5 to 100 % by weight of a modified epoxidized natural rubber.

Patent Document 1: Japanese Patent Laying-Open No. 2006-249147
Patent Document 2: Japanese Patent Laying-Open No. 2006-143821

DISCLOSURE OF THE INVENTION

PROBLEMS TO BE SOLVED BY THE INVENTION

An object of the present invention is to provide a ply that has superior processability upon preparation thereof, with a reduced hysteresis loss, while reducing the amount of use of materials derived from petroleum resources, as well as a pneumatic tire provided with this.

MEANS FOR SOLVING THE PROBLEMS

The present invention provides a ply made from a rubber composition that includes 100 parts by mass of a rubber component composed of either one or both of a natural rubber and a modified natural rubber, 25 to 80 parts by mass of silica having a BET specific surface area of not more than 150 m$^2$/g and 1 to 5 parts by mass of carbon black, and a pneumatic tire provided with these members.

Moreover, the present invention provides a ply made from a rubber composition that includes 30 to 70 parts by mass of silica having a BET specific surface area of not more than 150 m$^2$/g and 1 to 5 parts by mass of carbon black, relative to 100 parts by mass of a rubber component, and the rubber component is composed of either one or both of a natural rubber and a modified natural rubber.

The present invention also provides a pneumatic tire provided with a ply using the above-mentioned ply.

EFFECTS OF THE INVENTION

The present invention makes it possible to provide a ply that can reduce the amount of use of materials derived from petroleum resources, and has superior processability upon preparation thereof, with a reduced hysteresis loss, and a pneumatic tire using such a ply.

BRIEF DESCRIPTION OF THE DRAWINGS

Fig. 1 is a cross-sectional view showing a half portion of a pneumatic tire in accordance with the present invention.
Fig. 2 is a cross-sectional view showing a half portion of the pneumatic tire in accordance with the present invention.

DESCRIPTION OF THE REFERENCE SIGNS

1 Tire, 2 Tread portion, 2a Cap tread portion, 2b Base tread portion, 3 Side wall portion, 4 Bead portion, 5 Bead core, 6 Carcass, 6a Carcass ply, 7 Belt layer, 7a Belt ply, 8 Bead apex rubber, 9 Inner liner rubber, 3G Side wall rubber, 4G Clinch rubber

BEST MODES FOR CARRYING OUT THE INVENTION

In the ply of the present invention, by reducing the compounding amount of carbon black to a comparatively small amount as well as by using a predetermined amount of silica having a small BET specific surface area in combination, the resulting ply has superior processability upon preparation and a reduced hysteresis loss. The reduction in the hysteresis loss of the ply contributes to a reduction in rolling resistance of the pneumatic tire.

Moreover, in the present invention, a rubber component composed of at least either one or both of a natural rubber and a modified natural rubber is used, and the amount of use of carbon black is reduced to a small amount so that the amount of use of materials derived from petroleum resources can be reduced.

<Rubber component>

The rubber component to be used in the present invention contains a natural rubber component made of at least either one or both of a natural rubber (NR) and a modified natural rubber. The rubber component may be preferably prepared as a natural rubber component.

As the natural rubber, among those conventionally used in the rubber industry, one kind of them may be used, or two or more kinds of them may be used in combination, and for example, natural rubbers of a grade such as RSS#3 or TSR may be used.

As the modified natural rubber, among epoxidized natural rubbers (ENR) and hydrogenated natural rubbers, for example, one kind of them may be used, or two or more kinds of them may be used in combination. In the present invention, from the viewpoints of easy achieving both of the reducing effect on the amount of use of materials derived from petroleum resources and superior rubber physical properties, an epoxidized natural rubber (ENR) is preferably used as the modified natural rubber.

The epoxidized natural rubber is one kind of modified natural rubbers, in which unsaturated double bonds of a natural rubber are epoxidized, and by the epoxy group that is a polar group, molecule cohesion is increased. For this reason, the epoxidized natural rubber has a glass transition temperature (Tg) higher than that of the natural rubber, and is superior in mechanical strength and abrasion resistance. In particular, in the case where silica is blended in the rubber composition, it becomes possible to provide mechanical strength and abrasion resistance as high as a rubber composition in which carbon black is blended, because of a reaction between a silanol group on the surface of silica and an epoxy group of the epoxidized natural rubber.

As the epoxidized natural rubber (ENR), those commercially available may be used, or those formed by epoxidizing a natural rubber (NR) may be used. The method for epoxidizing the natural rubber (NR) is not particularly limited, and for example, a chlorohydrin method, a direct oxidizing method, a hydrogen peroxide method, an alkyl hydroperoxide method and a peroxide method may be used. As the peroxide method, for example, a method may be used in which, for example, an emulsion of a natural rubber is allowed to react with an organic peracid, such as peracetic acid or performic acid, serving as an epoxidizing agent.

Moreover, the epoxidizing rate refers to a rate of the number of epoxidized double bonds between carbons in a natural rubber, relative to the total number of double bonds in the natural rubber prior to the epoxidizing process, and this rate is found by using, for example, a titration analysis or a nuclear magnetic resonance (NMR) analysis.

In the ply of the present invention, the epoxidizing rate of an epoxidized natural rubber is preferably set to not less than 5%, more preferably to not less than 10%. In the case where the epoxidizing rate is less than 5%, since the glass transition temperature of the rubber component is low and the rigidity and hardness of the ply are low, the mechanical strength tends to be lowered. In contrast, the epoxidizing rate of the epoxidized natural rubber is preferably set to not more than 65%, more preferably to not more than 60%. In the case where the epoxidizing rate exceeds 65%, the ply tends to be hardened to cause a reduction in the mechanical strength. As the epoxidized natural rubber, typically, an epoxidized natural rubber having an epoxidizing rate of 25%, or an epoxidized natural rubber having an epoxidizing rate of 50%, may be used.

In the ply of the present invention, the content of a natural rubber in the rubber component is preferably set to not less than 50% by mass, more preferably to not less than 60%. In the case where the content of the natural rubber is less than 50% by mass, the rubber hardness tends to be higher to cause a reduction in the mechanical strength. In contrast, the content of a natural rubber in the rubber component is preferably set to not more than 90% by mass, more preferably to not more than 80% by mass. In the case where the content of the natural rubber exceeds 90% by mass, the rubber hardness becomes smaller, with the result that the mechanical strength tends to be lowered.

In the ply of the present invention, the content of the epoxidized natural rubber in the rubber component is preferably set to not less than 10% by mass, more preferably to not less than 20% by mass. In the case where the content of the epoxidized natural rubber is less than 10% by mass, the rubber hardness and rigidity in the ply are lowered, with the result that the mechanical strength tends to be lowered. In contrast, the content of the epoxidized natural rubber in the rubber component is preferably set to not more than 50% by mass, more preferably to not more than 40% by mass. In the case where the content of the epoxidized natural rubber exceeds 50% by mass, the rubber hardness and rigidity in the ply become too high, with the result that the mechanical strength of the ply is lowered on the contrary.

Here, one portion or the entire portion of the natural rubber (NR) may be prepared as a deproteinized natural rubber (DPNR), or one portion or the entire portion of the modified natural rubber may be prepared as a modified rubber of the deproteinized natural rubber (DPNR).

<Silica>

The ply of the present invention contains silica having a BET specific surface area of not more than 150 $m^2$/g. When the BET specific surface area of the silica exceeds 150 $m^2$/g, the viscosity rises upon preparation of a rubber composition for the ply to cause degradation in the processability. The BET specific surface area of the silica is more preferably set to not more than 130 $m^2$/g. Here, in the case where the BET specific surface area of the silica is less than 70 $m^2$/g, the hardness of the ply is lowered, with the result that the mechanical strength tends to be lowered; therefore, the BET specific surface area is preferably set to not less than 70 $m^2$/g, more preferably to not less than 90 $m^2$/g.

In the ply of the present invention, when two kinds or more of silica having different BET specific surface areas are used in combination, the number average value of BET specific surface areas in the entire silica is set to not more than 150 $m^2$/g.

The compounding amount of the silica relative to 100 parts by mass of a rubber component is set in a range from 30 to 70 parts by mass. When the compounding amount of the silica is less than 30 parts by mass, the reinforcing effect of the ply is not sufficiently obtained, while when the compounding amount exceeds 70 parts by mass, the processability of the rubber composition for the ply is lowered, with an increase in the hysteresis loss. The compounding amount of the silica is preferably set to not less than 40 parts by mass, and also to not more than 60 parts by mass.

In the present invention, one kind of silica may be used or two or more kinds of silica may be used in combination, and when two kinds or more of silica are used in combination, the BET specific surface area is found as the number average of the entire silica.

Moreover, the silica to be used in the present invention may be prepared by a wet method, or may be prepared by a dry method. Examples of preferable commercial products include: "Ultrasil VN2" (BET specific surface area: 125 $m^2$/g) made by Degussa.

<Silane Coupling Agent>

In the present invention, a silane coupling agent is preferably blended together with silica. Thus, a superior reinforcing effect is given to the ply of the present invention.

Conventionally known silane coupling agents may be used as the silane coupling agent, and examples thereof include: sulfide-based coupling agents, such as bis(3-triethoxysilyl propyl)tetrasulfide, bis(2-triethoxysilyl ethyl)tetrasulfide, bis(4-triethoxysilyl butyl)tetrasulfide, bis(3-trimethoxysilyl propyl)tetrasulfide, bis(2-trimethoxysilyl ethyl)tetrasulfide, bis(4-trimethoxysilyl butyl)tetrasulfide, bis(3-triethoxysilyl propyl)trisulfide, bis(2-triethoxysilyl ethyl)trisulfide, bis(4-triethoxysilyl butyl)trisulfide, bis(3-trimethoxysilyl propyl)trisulfide, bis(2-trimethoxysilyl ethyl)trisulfide, bis(4-trimethoxysilyl butyl)trisulfide, bis(3-triethoxysilyl propyl)disulfide, bis(2-triethoxysilyl ethyl)disulfide, bis(4-triethoxysilyl butyl)disulfide, bis(3-trimethoxysilyl propyl)disulfide, bis(2-trimethoxysilyl ethyl)disulfide, bis(4-trimethoxysilyl butyl)disulfide, 3-trimethoxysilyl propyl-N,N-dimethyl thiocarbamoyl tetrasulfide, 3-triethoxysilyl propyl-N,N-dimethyl thiocarbamoyl tetrasulfide, 2-triethoxysilyl ethyl-N,N-dimethyl thiocarbamoyl tetrasulfide, 2-trimethoxysilyl ethyl-N,N-dimethyl thiocarbamoyl tetrasulfide, 3-trimethoxysilyl propyl benzothiazolyl tetrasulfide, 3-triethoxysilyl propyl benzothiazole tetrasulfide, and 3-trimethoxysilyl propyl methacrylate monosulfide; mercapto-based coupling agents, such as 3-mercaptopropyl trimethoxy silane, 3-mercaptopropyl triethoxy silane, 2-mercaptoethyl trimethoxy silane and 2-mercaptoethyl triethoxy silane; vinyl-based coupling agents, such as vinyl triethoxy silane and vinyl trimethoxy silane; amino-based coupling agents, such as 3-aminopropyl triethoxy silane, 3-aminopropyl trimethoxy silane, 3-(2-aminoethyl)aminopropyl triethoxy silane and 3-(2-aminoethyl)aminopropyl trimethoxy silane; glcidoxy-based coupling agents, such as γ-glycidoxypropyl triethoxy silane, γ-glycidoxypropyl trimethoxy silane, γ-glycidoxypropyl methyldiethoxy silane and γ-glycidoxypropyl methyldimethoxy silane; nitro-based coupling agents, such as 3-nitropropyl trimethoxy silane and 3-nitropropyl triethoxy silane; and chloro-based coupling agents, such as 3-chloropropyl trimethoxy silane, 3-chloropropyl triethoxy silane, 2-chloroethyl trimethoxy silane and 2-chloroethyl triethoxy silane. One of these silane coupling agents may be used alone, or two or more kinds of these may be used in combination.

Among the above-mentioned agents, from the viewpoint of good processability, Si69 (bis(3-triethoxysilyl propyl) tetrasulfide), Si266 (bis(3-triethoxysilyl propyl)disulfide) and the like, made by Degussa are preferably used.

In the ply of the present invention, the compounding amount of the silane coupling agent is preferably set in a range from 1 to 20% by mass relative to 100% by mass of the compounding amount of silica. In the case where the compounding amount of the silane coupling agent is less than 1% by mass, the reinforcing effect tends to be lowered, while in the case where it exceeds 20% by mass, even if the amount is increased, it is not possible to expect remarkable improvements in the reinforcing effect, and a problem arises in that the product is not economical due to an increase in the costs. From the viewpoints of dispersibility and the coupling effect, the compounding amount of the silane coupling agent is preferably set from not less than 5% by mass to not more than 12% by mass.

<Carbon Black>

In the ply of the present invention, the compounding amount of the carbon black is set to not more than 5 parts by mass relative to 100 parts by mass of the rubber component. In the case where the compounding amount of the carbon black exceeds 5 parts by mass, the reducing effect for the amount of use of materials derived from petroleum resources and the reducing effect for the hysteresis loss are not sufficiently obtained. Moreover, the compounding amount of the carbon black is preferably set to not more than 4 parts by mass. Here, in the case where the compounding amount of the carbon black is less than 1 part by mass, it becomes necessary to blend, for example, more silica so as to maintain the mechanical strength of the ply, with the result that the processability during its preparation and the adhesiveness to a ply cord tend to be lowered; therefore, the compounding amount is preferably set to not less than 1 part by mass, more preferably to not less than 2 parts by mass.

As desirable commercial products for carbon black to be used for the ply of the present invention, examples thereof include "Showblack N330", "Showblack N351", "Showblack N550" and the like, made by Cabot Japan.

<Other Compounding Agents>

In addition to the above-mentioned components, other compounding agents conventionally used in the rubber industry, such as a vulcanizing agent, stearic acid, a vulcanizing accelerator, a vulcanizing accelerator aid, oil, a curable resin, a wax and an antioxidant, may be blended in the ply of the present invention.

As the vulcanizing agent, an organic peroxide or a sulfur-based vulcanizing agent may be used, and examples of the organic peroxide include: benzoyl peroxide, dicumyl peroxide, di-t-butyl peroxide, t-butyl cumyl peroxide, methylethyl ketone peroxide, cumene hydroperoxide, 2,5-dimethyl-2,5-di(t-butyl peroxy)hexane, 2,5-dimethyl-2,5-di(benzoyl peroxy)hexane, 2,5-dimethyl-2,5-di(t-butyl peroxy)hexine-3 or 1,3-bis(t-butyl peroxy propyl)benzene, di-t-butyl peroxy-diisopropyl benzene, t-butyl peroxy benzene, 2,4-dichlorobenzyol peroxide, 1,1-di-t-butyl peroxy-3,3,5-trimethyl siloxane, and n-butyl-4,4-di-t-butyl peroxy valerate. Among these, dicumyl peroxide, t-butyl peroxy benzene and di-t-butyl peroxy-diisopropyl benzene are preferably used. As the sulfur-based vulcanizing agent, examples thereof include sulfur and morpholine sulfide. Of these, sulfur is more preferably used. One of these vulcanizing agents may be used alone, or two or more kinds of these may be used in combination. Moreover, sulfur that has been subjected to an oil treatment may be used.

As the vulcanizing accelerator, an accelerator containing at least one of sulphenamide-based, thiazole-based, thiuram-based, thiourea-based, guanidine-based, dithiocarbamic acid-based, aldehyde-amine-based or aldehyde-ammonia-based, and imidazoline-based or xantate-based vulcanizing accelerators may be used. As the sulphenamide-based vulcanizing accelerator, for example, sulphenamide-based compounds, such as CBS (N-cyclohexyl-2-benzothiazyl sulphenamide), TBBS (N-tert-butyl-2-benzothiazyl sulphenamide), N,N-dicyclohexyl-2-benzothiazyl sulphenamide, N-oxydiethylene-2-benzothiazyl sulphenamide, N,N-diisopropyl-2-benzothiazole sulphenamide, may be used. As the thiazole-based vulcanizing accelerator, for example, thiazole-based compounds, such as MBT (2-mercaptobenzothiazole), MBTS (dibenzothiazyl disulfide), sodium salts, zinc salts, copper salts and cyclohexylamine salts of 2-mercaptobenzothiazole, 2-(2,4-dinitrophenyl)mercaptobenzothiazole, and 2-(2,6-diethyl-4-morpholinothio)benzothiazole, may be used. As the thiuram-based vulcanizing accelerator, thiuram-based compounds, such as TMTD (tetramethylthiuram disulfide), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide and pentamethylenethiuram tetrasulfide, may be used. As the thiourea-based vulcanizing accelerator, for example, thiourea compounds, such as thiacarbamide, diethyl thiourea, dibutyl thiourea, trimethyl thiourea and diorthotolyl thiourea, may be used. As the guanidine-based vulcanizing accelerator, for example, guanidine-based compounds, such as diphenyl guanidine, diorthotolyl guanidine, triphenyl guanidine, orthotolyl biguanide and diphenylguanidine phthalate, may be used. As the dithiocarbamic acid-based vulcanizing accelerator, for example, dithiocarbamic acid-based compounds, such as zinc ethylphenyl dithiocarbamate, zinc butylphenyl dithiocarbamate, sodium dimethyl-

EP 2 154 192 B1

dithiocarbamate, zinc dimethyldithiocarbamate, zinc diethyldithiocarbamate, zinc dibutyldithiocarbamate, zinc diamyldithiocarbamate, zinc dipropyldithiocarbamate, complex salts of zinc pentamethylene dithiocarbamate and piperidine, zinc hexadecyl (or octadecyl) isopropyl dithiocarbamate, zinc dibenzyl dithiocarbamate, sodium diethyldithiocarbamate, pentamethylene dithiocarbamic acid piperidine, selenium dimethyldithiocarbamate, tellurium diethyldithiocarbamate and cadmium diamyldithiocarbamate, may be used. As the aldehyde-amine based or aldehyde-ammonia based vulcanizing accelerator, for example, aldehyde-amine based or aldehyde-ammonia based compounds, such as acetaldehyde-aniline reactants, butylaldehyde-aniline condensation products, hexamethylene tetramine and acetaldehyde-ammonia reactants. As the imidazoline-based vulcanizing accelerator, for example, imidazoline-based compounds such as 2-mercaptoimidazoline may be used. As the xantate-based vulcanizing accelerator, for example, xantate-based compounds such as zinc dibutylxanthogenate may be used. One of these vulcanizing accelerator may be used alone, or two or more kinds of these may be used in combination.

As the vulcanizing accelerator aid, for example, zinc oxide may be used.

As the antioxidant, an appropriate one may be selected from amine-based, phenol-based and imidazole-based antioxidants and metallic salts of carbamate, and used.

As the oil, process oil, vegetable oil, or a mixture of these may be used. Examples of the process oil include: paraffin-based process oil, naphthene-based process oil and aromatic process oil. Examples of the vegetable oil include: castor oil, cotton seed oil, linseed oil, rapeseed oil, soybean oil, palm oil, coconut oil, peanut oil, rosin oil, pine oil, pine tar, tall oil, corn oil, rice oil, safflower oil, sesame oil, olive oil, sunflower oil, palm kernel oil, camellia oil, jojoba oil, macadamia nut oil, safflower oil and tung oil.

<Pneumatic Tire>

The present invention also provides a pneumatic tire having the above-mentioned ply.

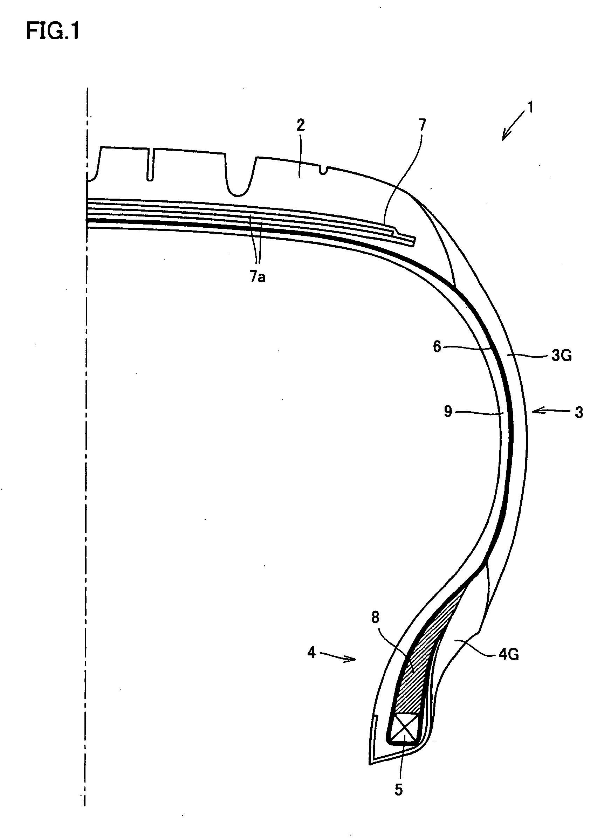

Fig. 1 is a cross-sectional view that shows a half-portion of a pneumatic tire in accordance with the present invention. A pneumatic tire 1 is generally provided with a tread portion 2, a pair of sidewall portions 3 that extend inward in a tire radial direction from the two ends of tread portion 2 and a bead portion 4 placed on the inner edge of each of side wall portions 3. A carcass 6 is bridged between these bead portions 4, and a belt layer 7 that has a hoop effect to reinforce tread portion 2 is placed on the outside of carcass 6 as well as on the inside of tread portion 2.

This carcass 6 is made of one or more sheets of carcass plies each having carcass cords arranged, for example, with an angle of 70 to 90°, relative to a tire equator CO, and these carcass plies are passed from tread portion 2 to reach bead portion 4 through each side wall portion 3, and turned up around a bead core 5 of bead portion 4 from inside to outside in the tire axis direction, and then engaged and stopped.

Belt layer 7 is constituted by two or more belt plies having belt cords arranged with, for example, an angle of not more than 40° relative to tire equator CO, and the respective belt cords are superposed on one another in respectively different directions so as to intersect with one another between the plies.

Moreover, in bead portion 4, a bead apex rubber 8 that extends outward from bead core 5 in a radial direction is disposed, and on the inside of carcass 6, an inner liner rubber 9 that forms the tire inner void face is placed adjacent thereto, and the outside of carcass 6 is protected by a clinch rubber 4G and a side wall rubber 3G.

The plies, possessed by the pneumatic tire of the present invention, are typically prepared as at least either one of the above-mentioned carcass plies or belt plies. Each ply is formed by coating ply cords that are organic fiber cords made from, for example, polyester, nylon or another material such as polyamide or rayon, with the rubber composition for the ply of the present invention by using a conventionally known method.

By using the ply of the present invention, the amount of use of materials derived from petroleum resources can be reduced, and it becomes possible to form a ply that can reduce the hysteresis loss and is superior in durability. Therefore, the pneumatic tire in which the ply is formed as, for example, the carcass plies or the belt plies, makes it possible to provide a so-called "eco-tire" that is environmentally friendly by reducing the amount of use of materials derived from petroleum resources, and has superior durability with a reduced rolling resistance.

The pneumatic tire of the present invention can be produced by using the ply of the present invention in accordance with a conventionally known method. That is, compounding components to be used for obtaining a rubber composition for the ply of the present invention are kneaded, and ply cords are coated with the resulting unvulcanized rubber composition so that a ply is obtained. The ply is applied in a predetermined shape to a pneumatic tire, and molded on a tire molding machine by using a normal method together with other members of the tire so that an unvulcanized tire is formed. By heating this unvulcanized tire in a vulcanizing machine while applying a pressure thereto, a pneumatic tire of the present invention is obtained.

The pneumatic tire provided by the present invention is desirably used for various applications, for example, passenger cars, trucks, buses and heavy vehicles, as the "eco-tire" that is friendly to the earth environment.

Referring to Fig. 1, the following description will discuss the pneumatic tire of the present invention. Fig. 1 is a schematic cross-sectional view that shows one example of a pneumatic tire in accordance with the present invention.

A pneumatic tire 1 is provided with a tread portion 2, a pair of sidewall portions 3 that extend inward in a tire radial direction from the two ends of tread portion 2 and a bead portion 4 placed on the inner edge of each of side wall portions 3. A carcass 6 is bridged between these bead portions 4, and a belt layer 7 that has a hoop effect to reinforce tread portion 2 is placed on the outside of carcass 6 as well as on the inside of tread portion 2.

This carcass 6 is made of one or more sheets of carcass plies 6a in which carcass cords are arranged, for example, with an angle of 70 to 90°, relative to a tire equator CO, and these carcass plies 6a are passed from tread portion 2 to reach a bead portion 4 through each side wall portion 3, and turned up around a bead core 5 of bead portion 4 from inside to outside in the tire axis direction, and then engaged and stopped.

Belt layer 7 is constituted by two or more belt plies 7a in which belt cords are arranged with, for example, an angle of not more than 40° relative to tire equator CO, and the respective belt cords are superposed on one another in respectively different directions so as to intersect with one another between the plies. Here, if necessary, a band layer (not shown) that is used to prevent lifting of the two end portions of belt layer 7 may be placed at least on the outside of belt layer 7, and in this case, the band layer is prepared as continuous plies that are formed by helically winding organic fiber cords with a low modulus in substantially parallel with tire equator CO.

Moreover, in bead portion 4, a bead apex rubber 8 that extends outward from bead core 5 in a radial direction is disposed, and on the inside of carcass 6, an inner liner rubber 9 that forms the tire inner void face is placed adjacent thereto, and the outside of carcass 6 is protected by a clinch rubber 4G and a side wall rubber 3G. The clinch of the present invention is used for clinch rubber 4G.

Fig. 1 exemplifies a pneumatic tire for a passenger car; however, the present invention is not intended to be limited by this, and provides a pneumatic tire that can be used for applications for various vehicles, such as passenger cars, trucks, buses and heavy vehicles.

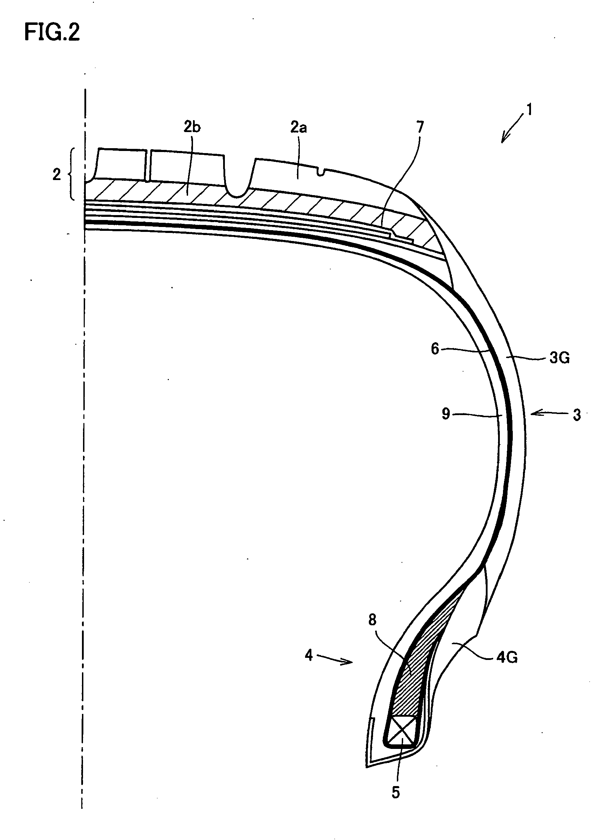

Fig. 2 is a cross-sectional view that shows a left half portion of a pneumatic tire in accordance with the present invention. A pneumatic tire 1 is generally provided with a tread portion 2, a pair of sidewall portions 3 that extend inward in a tire radial direction from the two ends of tread portion 2 and a bead portion 4 placed on the inner edge of each of side wall portions 3. A carcass 6 is bridged between these bead portions 4, and a belt layer 7 that has a hoop effect to reinforce tread portion 2 is placed on the outside of carcass 6 as well as on the inside of tread portion 2.

This carcass 6 is made of one or more sheets of carcass plies each having carcass cords arranged, for example, with an angle of 70 to 90°, relative to a tire equator CO, and these carcass plies are passed from tread portion 2 to reach bead portion 4 through each side wall portion 3, and turned up around a bead core 5 of bead portion 4 from inside to outside in the tire axis direction, and then engaged and stopped.

Belt layer 7 is constituted by two or more belt plies in which belt cords are arranged with, for example, an angle of not more than 40° relative to tire equator CO, and the respective belt cords are superposed on one another in respectively different directions so as to intersect with one another between the plies.

Moreover, in bead portion 4, a bead apex rubber 8 that extends outward from bead core 5 in a radial direction is disposed, and on the inside of carcass 6, an inner liner rubber 9 that forms the tire inner void face is placed adjacent thereto, and the outside of carcass 6 is protected by a clinch rubber 4G and a side wall rubber 3 G.

As shown in Fig. 2, the pneumatic tire of the present invention may be provided with a cap tread portion 2a and a base tread portion 2b.

EXAMPLES

The following description will discuss the present invention in detail by way of Examples and Comparative Examples; however, the present invention is not intended to be limited by these.

<Examples 1 and 2 and Comparative Examples 1 to 3>

In accordance with respective compounding ratios shown in Table 1, compounding components except for sulfur and a vulcanizing accelerator were kneaded at 150°C for 5 minutes by using a 1.7 L Banbury mixer made by Kobe Steel to obtain a kneaded matter. To this were further added sulfur and a vulcanizing accelerator in accordance with the compounding ratios shown in Table 1, and the resulting kneaded matter was further kneaded at 90°C for 5 minutes by using an open roll so that an unvulcanized rubber composition was prepared.

The unvulcanized rubber composition thus obtained was extruded to form an unvulcanized rubber sheet having a predetermined thickness. Moreover, the unvulcanized rubber sheet was vulcanized at 150°C for 30 minutes so that a cured rubber sheet having a predetermined thickness was produced.

(Mooney viscosity index)

The above-mentioned unvulcanized rubber composition was subjected to measurement of the Mooney viscosity at 130°C in accordance with JIS K6300, and supposing that the Mooney viscosity of Comparative Example 1 is 100, the Mooney viscosity index was found based upon the following equation:

$$\text{Mooney viscosity index} = (\text{Mooney viscosity of Comparative Example 1})$$

$$\div (\text{Mooney viscosity of each of Examples or Comparative Examples}) \times 100$$

Here, as the index becomes greater, the Mooney viscosity becomes smaller, indicating that the rubber composition is superior in processability.

(External appearance of unvulcanized rubber sheet)

An unvulcanized rubber sheet having a thickness of 1.0 mm was formed by using the above-mentioned method, and the surface texture of the unvulcanized rubber sheet was visually observed. Those that had neither edge cracks nor problems on the surface, and were desirably processed into unvulcanized rubber sheets were evaluated as A, while those that failed to satisfy these were evaluated as B.

(E*index, tan δ index)

The cured rubber sheet produced by the above-mentioned method was cut out so that a sample was taken out, and the sample was measured on E*(complex elastic modulus) and tan δ (loss tangent) respectively under conditions of a temperature of 70°C, an initial strain of 10% and a dynamic strain of 2%, by using a viscoelastic spectrometer VES (made by Iwamoto Seisakusho). Supposing that E* of Comparative Example 1 is 100 and that tan δ of Comparative Example 1 is 100, the E* index and the tan δ index were found based upon the following equations:

$$\text{E* index} = (\text{E* of each of Examples or Comparative Examples}) \div (\text{E* of}$$

$$\text{Comparative Example 1}) \times 100$$

$$\text{Tan δ index} = (\text{tan δ of Comparative Example 1}) \div (\text{tan δ of each of Examples or}$$

$$\text{Comparative Examples}) \times 100$$

Here, as the E* index becomes greater, the sample is superior in mechanical strength, and as the tan δ index becomes greater, the hysteresis loss becomes smaller, indicating that the sample is superior in rolling resistance.

## Table 1

| | | Example 1 | Example 2 | Comparative Example 1 | Comparative Example 2 | Comparative Example 3 |
|---|---|---|---|---|---|---|
| Compounding ratio (Parts by mass) | Natural rubber (NR)[(note 1)] | 100 | 100 | 100 | 100 | 100 |
| | Epoxidized natural rubber (note 2) | - | 30 | 30 | 30 | - |
| | Carbon black[(note 3)] | 2 | 2 | 2 | 2 | 2 |
| | Silica A[(note 4)] | - | - | 50 | - | - |
| | Silica B[(note 5)] | 50 | 50 | - | 25 | 75 |
| | Silane coupling agent[(note 6)] | 4 | 4 | 4 | 2 | 6 |
| | Stearic acid [(note 7)] | 2.0 | 2.0 | 2.0 | 2.0 | 2.0 |
| | Zinc oxide[(note 8)] | 5 | 5 | 5 | 5 | 5 |
| | Sulfur[(note 9)] | 3.0 | 3.0 | 3.0 | 3.0 | 3.0 |
| | Vulcanizing accelerator[(note 10)] | 1 | 1 | 1 | 1 | 1 |
| Performance evaluation | Mooney viscosity index | 110 | 110 | 100 | 120 | 90 |
| | Processability of unvulcanized rubber sheet | A | A | B | A | B |
| | E* index | 100 | 100 | 100 | 90 | 120 |
| | Tan δ index | 110 | 105 | 100 | 115 | 90 |

Note 1: Natural rubber is "RSS#3".

Note 2: Epoxidized natural rubber is "Epoxidized natural rubber" (Epoxidized ratio: 25 mol%) made by Kumpulan Guthrie.

Note 3: Carbon black is "Showblack N330" made by Showa Cabot.

Note 4: Silica A is "Ultrasil VN3" (BET specific surface area: 210 $m^2/g$) made by Degussa.

Note 5: Silica B is "Ultrasil VN2" (BET specific surface area: 125 $m^2/g$) made by Degussa.

Note 6: Silane coupling agent is "Si69" made by Degussa.

Note 7: Stearic acid is "Stearic acid" made by NOF Corporation.

Note 8: Zinc oxide is "Zinc Flower No. 1" made by Mitsui Mining & Smelting Co., Ltd.

Note 9: Sulfur is "Powder Sulfur" made by Turumi Chemical.

Note 10: Vulcanizing accelerator is "Nocceller NS" made by Ouchi Shinko Chemical Industrial Co., Ltd.

As shown in Table 1, in Comparative Example 1 in which the BET specific surface area of the blended silica is large, the external appearance of the unvulcanized rubber sheet is not good; in Comparative Example 2 in which the BET specific surface area of the blended silica is small with its blending amount being small, the E* index is not good; and in Comparative Example 3 in which the BET specific surface area of the blended silica is small with its blending amount being large, the Mooney viscosity index and the tan δ index are not good. In contrast, in Examples 1 and 2 in which predetermined amounts of carbon black and silica are used in combination so that the BET specific surface area of the silica is made small, all of the Mooney viscosity index, unvulcanized rubber sheet external appearance, E* index and tan δ index are good.

<Examples 3 to 5 and Comparative Examples 4 and 5>

In accordance with respective compounding ratios shown in Table 1, a 1.7L Banbury mixer made by Kobe Steel was filled with compounding components except for sulfur and a vulcanizing accelerator so as to be a filling rate of 58%, and this was kneaded for 3 minutes at the number of revolutions of 80 rpm until it reaches 140°C. Next, to the resulting kneaded matter were further added sulfur and a vulcanizing accelerator in accordance with the compounding ratios shown in Table 2, and this was further kneaded at 80°C for 5 minutes by using an open roll so that an unvulcanized rubber composition having a compounding ratio relating to each of Examples and Comparative Examples was prepared.

(Mooney viscosity index)

The above-mentioned unvulcanized rubber composition was subjected to measurements on the Mooney viscosity at 130°C in accordance with JIS K6300, and supposing that the Mooney viscosity of Comparative Example 1 is 100, the Mooney viscosity index was found based upon the following equation:

$$\text{Mooney viscosity index} =$$
$$(\text{Mooney viscosity of Comparative Example 1}) \div (\text{Mooney viscosity of each of}$$
$$\text{Examples and Comparative Examples}) \times 100$$

Here, as the index becomes greater, the Mooney viscosity becomes smaller, indicating that the rubber composition is superior in processability.

(Processability of unvulcanized rubber sheet)

By using the unvulcanized rubber composition, an unvulcanized rubber sheet having a thickness of 1.0 mm was extruded and formed by using a roll, and the surface texture of the unvulcanized rubber sheet was visually observed, and evaluated in the following criteria.

A: None of edge cracks and problems with the surface were observed and good processability was obtained.
B: At least either edge cracks or problems with the surface occurred, and the processability was poor.

(E* (complex elastic modulus) index)
By using the unvulcanized rubber composition, an unvulcanized rubber sheet having a thickness of 2 mm was extruded by using a calender with rolls, and this was vulcanized at 150°C for 30 minutes so that a test-use rubber sheet was produced. The test-use rubber sheet was subjected to a punching process by using a punching machine so that a measuring sample 4 mm in width $\times$ 40 mm in length was prepared. The measuring sample was measured on E* under conditions of a temperature of 70°C, an initial strain of 10% and a dynamic strain of 2%, by using a viscoelastic spectrometer VES (made by Iwamoto Seisakusho), and supposing that E* of Comparative Example 1 was 100, the E* index was found based upon the following equation:

$$\text{E* index} = (\text{E* of each of Examples or Comparative Examples}) \div (\text{E* of}$$
$$\text{Comparative Example 1}) \times 100$$

Here, as the index becomes greater, E* (complex elastic modulus) becomes higher, indicating that the measuring sample is superior in mechanical strength.

(Tan δ index)

By using the same method and same conditions as those of the above-mentioned measurements of E* (complex elastic modulus), tan δ of the test-use rubber sheet relating to each of Examples and Comparative Examples was measured, and based upon the following calculating formula, the index thereof was obtained.

Tan δ index = (tan δ of Comparative Example 1) ÷ (tan δ of each of Examples or Comparative Examples) × 100

Here, as the index becomes greater, the tan δ becomes lower, indicating that the rubber sheet is superior in rolling resistance.

Table 2

| | | Example 3 | Example 4 | Example 5 | Comparative Example 4 | Comparative Example 5 |
|---|---|---|---|---|---|---|
| Compounding ratio (Parts by mass) | Natural rubber (NR)[note 1] | 100 | 100 | 100 | 100 | 100 |
| | Carbon black[note 2] | 2 | 2 | 2 | 2 | 2 |
| | Silica A[note 3] | - | - | - | 60 | - |
| | Silica B[note 4] | 60 | 70 | 40 | - | 90 |
| | Silane coupling agent[note 5] | 4.8 | 5.6 | 3.2 | 4.8 | 7.2 |
| | Antioxidant[note 6] | 1 | 1 | 1 | 1 | 1 |
| | Stearic acid [note 7] | 1.5 | 1.5 | 1.5 | 1.5 | 1.5 |
| | Zinc oxide[note 8] | 3 | 3 | 3 | 3 | 3 |
| | Sulfur[note 9] | 1.5 | 1.5 | 1.5 | 1.5 | 1.5 |
| | Vulcanizing accelerator[note 10] | 2 | 2 | 2 | 2 | 2 |
| Performance evaluation | Mooney viscosity index | 110 | 105 | 120 | 100 | 95 |
| | Processability of unvulcanized rubber sheet | A | A | A | B | B |
| | E* index | 100 | 105 | 90 | 100 | 120 |
| | Tan δ index | 110 | 105 | 115 | 100 | 95 |

Note 1: Natural rubber is "TSR20".

Note 2: Carbon black is "Showblack N220" made by Showa Cabot.

Note 3: Silica A is "Ultrasil VN3" (BET: 210 m²/g) made by Degussa.

Note 4: Silica B is "Ultrasil VN2" (BET: 125 m²/g) made by Degussa.

Note 5: Silane coupling agent is "Si69" made by Degussa.

Note 6: Antioxidant is "Nocrac 6C" (N-(1,3-dimethylbutyl)-N'-phenyl-p-phenylene diamine, made by Ouchi Shinko Chemical Industrial Co., Ltd.

Note 7: Stearic acid is "Stearic acid" made by NOF Corporation.

Note 8: Zinc oxide is "Zinc Flower No. 1" made by Mitsui Mining & Smelting Co., Ltd.

Note 9: Sulfur is "Powder Sulfur" made by Turumi Chemical.

Note 10: Vulcanizing accelerator is "Nocceller NS" made by Ouchi Shinko Chemical Industrial Co., Ltd.

The results shown in Table 2 indicate that in Comparative Example 4 in which the BET specific surface area of the blended silica is large and Comparative Example 5 in which the content of silica is large, it is not possible to obtain superior processability due to an increase in the Mooney viscosity in the unvulcanized rubber composition; in contrast, in Examples 3 to 5 in which the BET specific surface area and the compounding amount of silica are set within the range of the present invention, the Mooney viscosity of the unvulcanized rubber composition is restrained to a low level, making it possible to provide superior processability. Moreover, in Examples 3 to 5, E* and tan δ of the test-use rubber sheet after the vulcanizing process showed good values.

<Examples 6 and 7 and Comparative Examples 6 and 7>

In accordance with respective compounding ratios shown in Table 3, a 1.7L Banbury mixer made by Kobe Steel was filled with compounding components except for sulfur and a vulcanizing accelerator so as to be a filling rate of 58%, and this was kneaded for 3 minutes at the number of revolutions of 80 rpm until it reaches 140°C. Next, to the resulting kneaded matter were further added sulfur and a vulcanizing accelerator in accordance with the compounding ratios shown in Table 3, and this was further kneaded at 80°C for 5 minutes by using an open roll so that an unvulcanized rubber composition having a compounding ratio relating to each of Examples and Comparative Examples was prepared.

(Mooney viscosity index)

The above-mentioned unvulcanized rubber composition was subjected to measurements on the Mooney viscosity at 130°C in accordance with JIS K6300, and supposing that the Mooney viscosity of Comparative Example 1 is 100, the Mooney viscosity index was found based upon the following equation:

$$\text{Mooney viscosity index} = (\text{Mooney viscosity of Comparative Example 1}) \div (\text{Mooney viscosity of each of Examples and Comparative Examples}) \times 100$$

Here, as the index becomes higher, the viscosity becomes lower, indicating that the rubber composition is superior in processability.

(Processability of unvulcanized rubber sheet)

By using the unvulcanized rubber composition, an unvulcanized rubber sheet having a thickness of 1.0 mm was extruded and formed by using a roll, and the surface texture of the unvulcanized rubber sheet was visually observed, and evaluated in the following criteria.

A: None of edge cracks and problems with the surface were observed and good processability was obtained.
B: At least either edge cracks or problems with the surface occurred, and the processability was poor.

(E* (complex elastic modulus) index)
By using the unvulcanized rubber composition, an unvulcanized rubber sheet having a thickness of 2 mm was extruded by using a calender with rolls, and this was vulcanized at 150°C for 30 minutes so that a test-use rubber sheet was produced. The test-use rubber sheet was subjected to a punching process by using a punching machine so that a measuring sample 4 mm in width × 40 mm in length was prepared. The measuring sample was measured on E* under conditions of a temperature of 70°C, an initial strain of 10% and a dynamic strain of 2%, by using a viscoelastic spectrometer VES (made by Iwamoto Seisakusho), and supposing that E* of Comparative Example 1 was 100, the E* index was found based upon the following equation:

$$\text{E* index} = (\text{E* of each of Examples or Comparative Examples}) \div (\text{E* of Comparative Example 1}) \times 100$$

Here, as the index becomes greater, E* (complex elastic modulus) becomes higher, indicating that the measuring sample is superior in mechanical strength.

(Tan δ index)

By using the same method and same conditions as those of the above-mentioned measurements of E* (complex elastic modulus), tan δ of the test-use rubber sheet relating to each of Examples and Comparative Examples was measured, and based upon the following calculating formula, the index thereof was obtained.

$$\text{Tan } \delta \text{ index} = (\tan \delta \text{ of Comparative Example 1}) \div (\tan \delta \text{ of each of Examples or}$$

$$\text{Comparative Examples)} \times 100$$

Here, as the index becomes greater, the tan δ becomes lower, indicating that the rubber sheet is superior in rolling resistance.

Table 3

| | | Example 6 | Example 7 | Comparative Example 6 | Comparative Example 7 |
|---|---|---|---|---|---|
| Compounding ratio (Parts by mass) | Natural rubber (NR)[(note 1)] | 100 | 100 | 100 | 100 |
| | Carbon black[(note 2)] | 2 | 2 | 2 | 2 |
| | Silica A[(note 3)] | - | - | 60 | - |
| | Silica B[(note 4)] | 40 | 60 | - | 20 |
| | Silane coupling agent[(note 5)] | 3.2 | 4.8 | 4.8 | 1.6 |
| | Antioxidant[(note 6)] | 1 | 1 | 1 | 1 |
| | Stearic acid [(note 7)] | 1.5 | 1.5 | 1.5 | 1.5 |
| | Zinc oxide[(note 8)] | 3 | 3 | 3 | 3 |
| | Sulfur[(note 9)] | 1.5 | 1.5 | 1.5 | 1.5 |
| | Vulcanizing accelerator[(note 10)] | 2 | 2 | 2 | 2 |
| Performance evaluation | Mooney viscosity index | 110 | 105 | 100 | 135 |
| | Processability of unvulcanized rubber sheet | A | A | B | A |
| | E* index | 100 | 110 | 100 | 65 |
| | Tan δ index | 110 | 105 | 100 | 130 |

Note 1: Natural rubber is "TSR20".

Note 2: Carbon black is "Showblack N220" made by Showa Cabot.

Note 3: Silica A is "Ultrasil VN3" (BET: 210 m$^2$/g) made by Degussa.

Note 4: Silica B is "Ultrasil VN2" (BET: 125 m$^2$/g) made by Degussa.

Note 5: Silane coupling agent is "Si266" made by Degussa.

Note 6: Antioxidant is "Nocrac 6C" (N-(1,3-dimethylbutyl)-N'-phenyl-p-phenylene diamine, made by Ouchi Shinko Chemical Industrial Co., Ltd.

Note 7: Stearic acid is "Stearic acid" made by NOF Corporation.

Note 8: Zinc oxide is "Zinc Flower No. 1" made by Mitsui Mining & Smelting Co., Ltd.

Note 9: Sulfur is "Powder Sulfur" made by Turumi Chemical.

Note 10: Vulcanizing accelerator is "Nocceller NS" made by Ouchi Shinko Chemical Industrial Co., Ltd.

The results shown in Table 3 indicate that in Comparative Example 6 which uses silica having a large BET specific surface area, it is not possible to obtain superior processability due to an increase in the Mooney viscosity of the unvulcanized rubber composition, and that in Comparative Example 2 in which the content of silica is small, E* of the test-use rubber sheet after the vulcanizing process was extremely low.

In contract, in Examples 1 and 2 in which the BET specific surface area and the compounding amount of silica are set within the range of the present invention, the Mooney viscosity of the unvulcanized rubber composition is restrained to a low level, making it possible to provide superior processability. Moreover, in Examples 6 and 7, tan $\delta$ of the test-use rubber sheet after the vulcanizing process showed a low value, without E* of the test-use rubber sheet after the vulcanizing process being lowered.

It is to be understood that while the embodiments and examples disclosed above illustrate the present invention, they are exemplary only and not restrictive. The scope of the present invention is indicated not by the above-mentioned description, but by the following claims, and variations are not to be regarded as a departure from the spirit and scope of the invention, and all such modifications are intended to be included within the scope of the following claims.

INDUSTRIAL APPLICABILITY

The ply of the present invention is desirably used for pneumatic tires for various applications, such as passenger cars, trucks, buses and heavy vehicles. Moreover, the pneumatic tire provided by the present invention is desirably used for various applications, for example, passenger cars, trucks, buses and heavy vehicles, as an "eco-tire" that is friendly to the earth environment.

**Claims**

1. A ply made from a rubber composition, wherein the rubber composition comprises: 100 parts by mass of a rubber component composed of either one or both of a natural rubber and a modified natural rubber, 25 to 80 parts by mass of silica having a BET specific surface area of not more than 150 $m^2$/g and 1 to 5 parts by mass of carbon black.

2. A ply made from a rubber composition, wherein the rubber composition comprises: 100 parts by mass of a rubber component composed of either one or both of a natural rubber and a modified natural rubber, 30 to 70 parts by mass of silica having a BET specific surface area of not more than 150 $m^2$/g and 1 to 5 parts by mass of carbon black.

3. The ply according to claim 2, wherein said modified natural rubber is an epoxidized natural rubber.

4. A pneumatic tire comprising the ply according to claim 2.

**Patentansprüche**

1. Aus einer Kautschukzusammensetzung hergestellte Kordlage, wobei die Kautschukzusammensetzung enthält: 100 Massenteile einer Kautschukkomponente, welche entweder aus einem oder beiden von einem Naturkautschuk und einem modifizierten Naturkautschuk zusammengesetzt ist, 25 bis 80 Massenteile Silica mit einer spezifischen BET Oberfläche von nicht mehr als 150 $m^2$/g und 1 bis 5 Massenteile Ruß.

**2.** Aus einer Kautschukzusammensetzung hergestellte Kordlage, wobei die Kautschukzusammensetzung enthält: 100 Massenteile einer Kautschukkomponente, welche aus einem oder beiden von einem Naturkautschuk und einem modifizierten Naturkautschuk zusammengesetzt ist, 30 bis 70 Massenteile Silica mit einer BET spezifischen Oberfläche von nicht mehr als 150 m$^2$/g und 1 bis 5 Massenteile Ruß.

**3.** Kordlage nach Anspruch 2, wobei der modifizierte Naturkautschuk ein epoxidierter Naturkautschuk ist.

**4.** Luftreifen, welcher eine Kordlage nach Anspruch 2 enthält.

**Revendications**

**1.** Pli réalisé à partir d'une composition de caoutchouc, dans lequel la composition de caoutchouc comprend: 100 parts en poids d'un composant de caoutchouc composé de l'un ou des deux parmi un caoutchouc naturel et un caoutchouc naturel modifié, de 25 à 80 parts en poids de silice ayant une surface spécifique BET non supérieure à 150 m$^2$/g et de 1 à 5 parts en poids de noir de carbone.

**2.** Pli réalisé à partir d'une composition de caoutchouc, dans lequel la composition de caoutchouc comprend: 100 parts en poids d'un composant de caoutchouc composé de l'un ou des deux parmi un caoutchouc naturel et un caoutchouc naturel modifié, de 30 à 70 parts en poids de silice ayant une surface spécifique BET non supérieure à 150 m$^2$/g et de 1 à 5 parts en poids de noir de carbone

**3.** Pli selon la revendication 2, dans lequel le caoutchouc naturel modifié est un caoutchouc naturel époxyde.

**4.** Pneu comprenant le pli selon la revendication 2.

FIG.1

FIG.2

**REFERENCES CITED IN THE DESCRIPTION**

**Patent documents cited in the description**

- JP 2006249147 A
- JP 2006143821 A
- EP 1659000 A1
- EP 1484359 A1